# EUROPEAN PATENT SPECIFICATION

(11) **EP 4 185 127 B1**
(45) Date of publication and mention of the grant of the patent: **10.07.2024**
(21) Application number: 21752182.2
(22) Date of filing: 21.07.2021
(51) Int. Cl.: A23L 5/10, A23L 19/18

(54) **STRUCTURE OF A MACHINE FOR COOKING SNACKS IN A SALT BATH**
STRUKTUR EINER MASCHINE ZUM KOCHEN VON SNACKS IN EINEM SALZBAD
STRUCTURE D'UNE MACHINE POUR CUIRE DES SNACKS DANS UN BAIN DE SEL

(30) Priority: 24.07.2020 IT 202000017965
(43) Date of publication of application: 31.05.2023
(73) Proprietor: Arco Srl, 35010 Gazzo Padovano (PD) (IT)
(72) Inventor: MALAMAN, Claudio, 36043 Camisano Vicentino (VI) (IT)
(74) Representative: Marchioro, Paolo
(86) International application number: PCT/IB2021/056585
(87) International publication number: WO 2022/018653

(56) References cited:
- EP-A1- 1 774 857
- CN-A- 110 679 975
- GB-A- 1 577 733
- GB-A- 2 450 866
- IT-A1- PD20 120 193
- US-A- 4 827 106
- US-B1- 6 588 363

## Description

The invention relates to a structure of a machine for cooking snacks in a salt bath.

The term 'snacks' refers in particular to those made from tubers, such as potatoes, as well as those made from cereals; such snacks are made available for purchase in sealed packages.

Nowadays, salt bath cooking procedures are becoming increasingly popular to prepare such snacks.

These salt bath processes are preferred to traditional cooking processes, such as frying or hot-air cooking, as they make it possible to overcome health issues associated with oil bath cooking and the drawbacks related to a defective cooking associated with hot-air cooking.

In order to carry out a cooking process of the salt bath type, specific machines are generally used to cook snacks such as crisps and the like.

Such machines for cooking snacks in a salt bath comprise:
- a mixing drum, with a horizontal axis, containing, inside thereof, a feed screw configured to force the snacks immersed in a salt bath to advance from an inlet mouth of the drum towards an outlet mouth of the same drum placed in a position opposite to the inlet mouth;
- an external containment jacket, inside which the mixing drum operates;
- means for heating the salt bath;
- motor drive means for the rotation of the mixing drum.

In order to separate the snacks from the salt bath near the outlet mouth of the mixing drum, the latter is generally equipped with an end portion comprising an ordered array of radial through holes through which the salt exits from inside the drum to fall into the gap between the mixing drum and the containment jacket, while the snacks proceed towards the outlet mouth and exit the latter to fall on conveying means towards the packaging machines.

In known machines, the salt bath is recirculated towards the inlet mouth of the mixing drum by means of a salt recirculation screw, defined in the gap between the mixing drum and the containment jacket.

This salt recirculation screw is configured to push the salt bath towards the drum inlet mouth, intercepting such salt bath as it falls from the radial hole portion of the mixing drum.

Prior art documents ITPD20120193 A1 and GB 1577733 A disclose machines for cooking snacks in a salt bath comprising such a salt recirculation screw.

These types of machines for cooking snacks in a salt bath, though well known and appreciated, have some drawbacks.

A first major drawback consists in the undesired grinding of the salt granules making up the salt bath.

In fact, the more crushed and finer the salt is, the more it tends to stick to the snack, with the serious risk of excessively salting the snack.

This grinding of the grains of the salt bath is mainly due to the stirring of the grains making up the salt bath, which then impact with each other, and to the continuous bumping and rubbing resulting from the contact with the surfaces of the feed and recirculation screws.

A further drawback associated to crushing salt granules consists in that the smaller the average size of the granules, the lesser the granule ability to store heat and release it slowly, i.e. the function of the salt bath is gradually reduced. This drawback leads to the further undesirable consequence of halting the machine in order to replace the salt bath which has lost its functionality and effectiveness.

Another drawback of the machines for cooking snacks in a salt bath is the complex construction of the two screws, one inside the rotating drum and one outside it, which are relatively complex to be designed and assembled.

The task of the present invention is to develop a structure of a machine for cooking snacks in a salt bath capable of overcoming the aforementioned drawbacks and limits of the prior art.

In particular, one object of the invention is to develop a machine structure leading to a smaller crushing of the salt grains making up the salt bath. Another object of the invention is to develop a machine structure that is easier to manufacture and assemble.

A further object of the invention is to develop a structure of a machine for cooking snacks in a salt bath that is as efficient, performing and robust as the machines of the prior art.

The above-mentioned task as well as the objects are achieved by a structure of a machine for cooking snacks in a salt bath according to claim 1.

Further characteristics of the machine structure according to claim 1 are described in the dependent claims.

The aforesaid task and objects, together with the advantages that will be mentioned below, are highlighted by the description of an embodiment of the structure of the machine for cooking snacks in a salt bath, which is given, by way of non-limiting explanation, with reference to the attached drawing tables, where:
- figure 1 represents a first perspective view of a machine structure according to the invention;
- figure 2 represents a second perspective view of a machine structure according to the invention;
- figure 3 represents a side view of the machine structure according to the invention;
- figure 4 represents a sectional side view of the machine structure according to the invention;
- figure 5 represents a perspective cross section view of the machine structure according to the invention;
- figure 6 represents a further perspective cross section view of the machine structure according to the invention;
- figure 7 represents another perspective cross section view of the machine structure according to the invention;
- figure 8 represents a detail of the machine structure according to the invention.

With reference to the mentioned figures, a structure of a machine for cooking snacks in a salt bath according to the invention is referred to, as a whole, by number **10.**

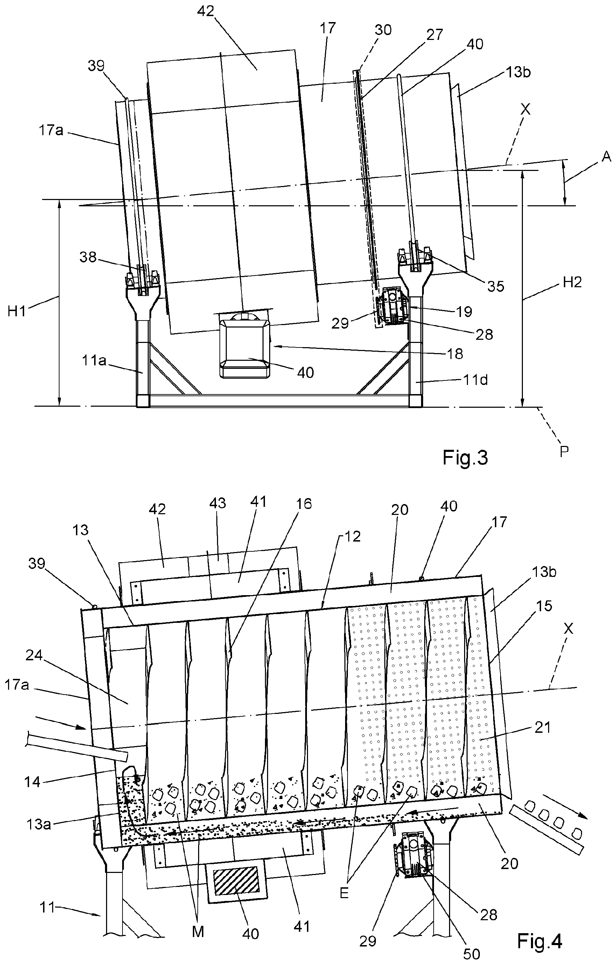

This machine structure **10** comprises:
- a load-bearing frame **11;**
- a mixing drum **12,** clearly visible in figure 4, comprising in turn a tubular body **13** extending along a main axis **X,** an inlet mouth **14,** an outlet mouth **15** and a feed screw **16,** internal to the tubular body **13** and extending between the inlet mouth **14** and the outlet mouth **15,** such feed screw **16** being configured to force a plurality of elements **E,** for example raw snacks to be cooked, placed inside the tubular body **13,** to advance from the inlet mouth **14** towards the outlet mouth **15;**
- a containment jacket **17,** which is configured to enclose the mixing drum **12** and is integral with it;
- a recirculation gap **20** defined between the mixing drum **12** and the containment jacket **17;**
- a sieving zone **21** defined within the containment jacket **17** for separating the elements **E,** inside the tubular body **13,** from a bath of granular material **M,** such as salt, in which these elements **E** are immersed;
- heating means **18** configured to heat said bath of granular material **M;**
- motor drive means **19** for rotating continuously said containment jacket **17** and said mixing drum **12** integral with it.

The inner compartment of the mixing drum **12** defines a cooking chamber for example for the elements **E,** i.e. for the snacks, which are cooked while remaining inside the bath of granular material **M,** i.e. in the salt bath.

The mixing drum **12,** the containment jacket **17** and the recirculation gap **20** are coaxial to the main axis **X.**

The characteristic feature of the machine structure **10** according to the invention is that the main axis **X** is tilted with respect to a reference horizontal plane **P,** with the outlet mouth **15** being placed at a height above the ground **H1** which is greater than a corresponding height above the ground **H2** of said inlet mouth **14.**

The heights **H1** and **H2** are shown, in figure 3, with reference to the centre of gravity of the inlet mouth **14** and the outlet mouth **15** respectively.

The containment jacket **17** thus defines a rotating chute for returning said granular material **M** from the outlet mouth **15** towards the inlet mouth **14.**

The tubular body **13** consists of a cylindrical wall, whose axis of symmetry is the main axis **X.**

The sieving zone **21** is defined by an annular terminal portion of the tubular body **13,** on the side of the outlet mouth **15,** which annular terminal portion has an ordered array of through holes, which are shaped in such a way as to enable the passage of the granules comprising the granular material **M,** while preventing the passage of the elements **E** being cooked.

At the inlet mouth **14** there are transfer means **22,** which are configured to move the granular material **M,** descending along the recirculation gap **20,** from the same recirculation gap **20** to the inside of the mixing drum **12.**

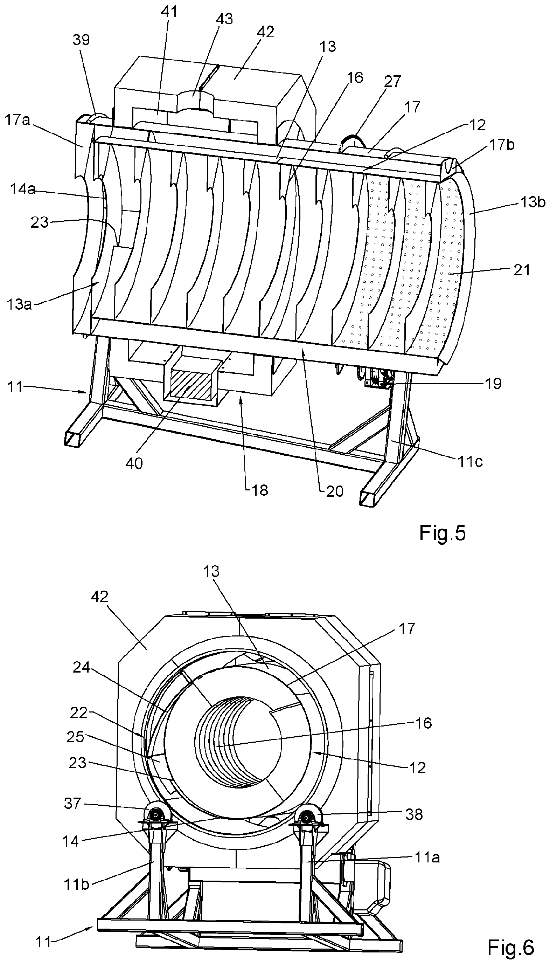

The transfer means **22** comprise:
- a recharge opening **23,** clearly visible in figures 5 to 8, defined on the tubular body **13,**
- and a deflection plate **24** extending between the inner surface of the tubular body **13** and the containment jacket **17,** said deflection plate **24** being configured to divert the granular material **M** from the recirculation gap **20** to the recharge opening **23.**

The recharge opening **23** consists, for example, of a quadrangular window opened on the tubular body **13** near the inlet mouth **14.**

The deflection plate **24** is arc-shaped and operates in the same way as a spoon, collecting the granular material **M** as it travels from the top to the bottom and again to the top of the rotational movement of such granular material **M,** and diverting said granular material **M** along a spiral path from the containment jacket **17,** and thus from the recirculation gap **20,** to the inside of the mixing drum **12.**

The mixing drum **12** comprises the cylindrical wall of the tubular body **13** and a rear annular wall **13a,** on which the inlet mouth **14** is defined.

The mixing drum **12** also comprises a truncated-cone discharge ring **13b** extending from the front edge, i.e., from the part of the outlet mouth **15,** of the tubular body **13.**

Such truncated-cone discharge ring **13b** has a diameter which increases in the direction moving away from the outlet mouth **15** outwards.

The containment jacket **17** also comprises a rear annular wall **17a,** defining with the facing rear annular wall **13a** of the mixing drum **12** a thermally-insulating gap.

The containment jacket **17** also includes a front reinforcement ring **17b,** configured to connect the front end of the tubular body **13** with the corresponding front end of the containment jacket **17.**

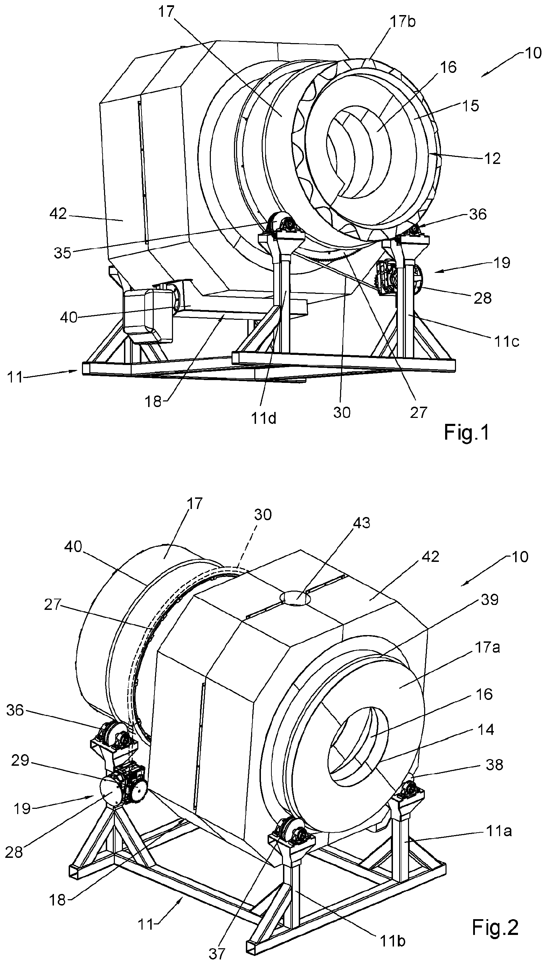

This front reinforcement ring **17b,** shown for instance in figure 1, comprises a plurality of radial connecting bridges, between which an equal amount of air passage openings are defined.

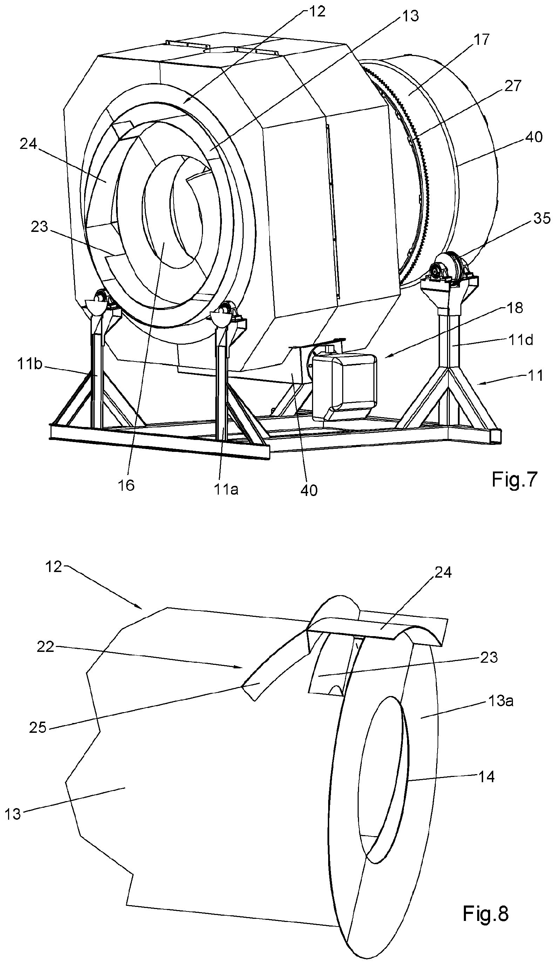

The transfer means **22** also comprise an oblique collecting wall **25,** clearly visible in figure 8, extending between the inner surface of the tubular body **13** and the containment jacket **17,** not shown in figure 8, which oblique collecting wall **25** is configured to divert the granular material **M** towards the deflection plate **24.**

In particular, such oblique collecting wall **25** extends according to a section of a helical trajectory on the external surface of the tubular body **13.**

Said oblique collecting wall **25** is thus configured to divert the granular material **M** by pushing it towards the recharge opening **23** during the rotational movement of the mixing drum **12** and the containment jacket **17.**

A characteristic feature of the machine structure according to the invention is therefore that the recirculation gap **20,** between the outlet mouth **15** and the deflection plate **24,** is empty and is suitable to be crossed by the granular material **M,** without the latter encountering other components.

Since there are no screws for handling the granular material nor other elements in the recirculation gap **20,** the granular material **M** is free to fall by gravity, sliding on the inner surface of the containment jacket **17,** inside the recirculation gap **20,** where the sliding is encouraged by the continuous rotation of the containment jacket **17,** determining the continuous overturning of the same granular material **M** in the recirculation gap **20.**

As exemplified in figure 3, the main axis **X** is preferably tilted, with respect to a reference horizontal plane **P,** by an angle **A** between 3° and 10°; for example, angle **A** measures 3°.

The heating means **18** are positioned so as to operate at least below the containment jacket **17** with respect to an arrangement of use of the machine structure **10.**

In particular, in the herein described embodiment of the machine structure **10** according to the invention, which is to be understood as exemplary and not limiting the invention itself, the heating means **18** comprise a burner **40,** connected to an annular heating channel **41** in turn defined inside a box-shaped body **42** enclosing a section of the containment jacket **17.**

Hot air obviously circulates in the annular heating channel **41,** which encloses the containment jacket **17.**

The box-shaped body **42** is integral with the load-bearing frame **11.**

This box-shaped body **42** is therefore crossed by the containment jacket **17.** The box-shaped body **42** has an upper hole **43** for exhausting fumes.

It must be understood that heating means may be different, based on the use of other fluids or on the use of electrical heating means, depending on the technical requirements.

In the embodiment of the invention described herein, which is of course to be understood as exemplifying and not limiting the invention, motor drive means **19** comprise:
- a ring gear **27,** coaxial to the main axis **X** and extending on the external surface of the containment jacket **17;**
- a motor **28,** such as, though not exclusively, an electric motor, with a pinion **29;**
- a flexible longitudinal element **30,** such as a belt or chain, for transmitting the torque from the pinion **29** to the ring gear **27.**

The motor **28** is mounted on a bracket **50,** visible in figure 4, in a position such that the rotation axis of the motor is parallel to the main axis **X.**

The load-bearing frame **11** comprises two rear pillars **11a, 11b** and two front pillars **11c, 11d.**

The front pillars **11c** and **11d** are higher than the two rear pillars **11a** and **11b.** On each of the rear pillars **11a** and **11b** and front pillars **11c** and **11d** there is a support wheel, **35, 36, 37, 38** respectively, configured to support and guide the rotation of the containment jacket **17.**

Each support wheel **35, 36, 37** and **38** has a rotation axis parallel to the main axis **X.**

In particular, in this embodiment, the support wheels **35, 36, 37** and **38** each have a perimeter groove coupling with a corresponding guide ring **39** and **40,** which guide ring **39** and **40** is fixed so as to enclose the external surface of the containment jacket **17.**

A rear guide ring **39** and a front guide ring **40** are present.

The rear pillars **11a** and **11b** and front pillars **11c** and **11d,** and the support wheels **35, 36, 37** and **38** define an assembly configured to allow the containment jacket **17** rotate continuously about the main axis **X.**

The term 'continuous rotation' means a rotation beyond 360° in the same rotation direction.

In order to return the granular material, i.e., the salt bath, back to the cooking chamber which is defined within the mixing drum **12,** it is possible to take advantage of the tilting of the assembly consisting of the mixing drum **12** and containment jacket **17,** and, in order to return the salt back to the inside of the mixing drum **12,** the deflection plate **24** is arranged, which defines a chute that, by turning integrally with the containment jacket **17,** picks up the salt from the area where it is deposited by gravity, i.e., the area below the rear end of the mixing drum **12,** and takes it back, by sliding, into the mixing drum **12** where cooking takes place.

The sieving zone **21** consists of a perforated plate, so that the salt falls from the mixing drum **12** to the containment jacket **17,** while the elements **E,** for example the snacks, expanded by the cooking process, being of a larger size, advance inside the mixing drum **12** until they come out frontally through the outlet mouth **15.**

The cooked snacks then fall onto conveying means and are conveyed to packaging machines.

It has in practice been established that the invention achieves the intended task and objects.

In particular, the invention has developed a machine structure that involves less crushing of the salt grains making up the salt bath, due to the gravity descent of the salt bath into the recirculation gap **20,** without a screw inside such gap forcing the salt bath to be further crushed.

In addition, the invention has developed a machine structure that is simpler to be manufactured and assembled, as it does not have all the components to force the salt bath back from the outlet mouth to the inlet mouth of the cooking chamber, i.e., of the mixing drum.

Furthermore, the invention has developed a structure of a machine for cooking snacks in a salt bath that is as efficient, performing and robust as the machines of the prior art.

## Claims

1. Structure of a machine (10) for cooking snacks in a salt bath, comprising:
- a load-bearing frame (11);
- a mixing drum (12), comprising a tubular body (13) extending along a main axis (X), an inlet mouth (14), an outlet mouth (15) and a feed screw (16), inside said tubular body (13) extending between said inlet mouth (14) and said outlet mouth (15), said feed screw (16) being configured to force a plurality of elements (E) placed inside said tubular body (13) to advance from said inlet mouth (14) towards said outlet mouth (15);
- a containment jacket (17), which is configured to enclose said mixing drum (12) and is integral with it;
- a recirculation gap (20) defined between said mixing drum (12) and said containment jacket (17);
- a sieving zone (21) defined within said containment jacket (17) for separating said elements (E), inside said tubular body (13), from a bath of granular material (M) in which said elements (E) are immersed;
- heating means (18) configured to heat said bath of granular material (M);
- motor drive means (19) for continuously rotating said containment jacket (17) and said mixing drum (12) integral with it;
- said mixing drum (12), said containment jacket (17) and said recirculation gap (20) being coaxial with respect to said main axis (X),
at said inlet mouth (14) being present transfer means (22) configured to move said granular material (M) from said recirculation gap (20) into said mixing drum (12),
**characterised in that** said main axis (X) is tilted with respect to a reference horizontal plane (P), with said outlet mouth (15) which is placed at a height above the ground (H1) which is greater than a corresponding height above the ground (H2) of said inlet mouth (14).

2. Machine structure according to claim 1, **characterised in that** said containment jacket (17) defines a rotating chute for returning said granular material (M) from said outlet mouth (15) towards said inlet mouth (14).

3. Machine structure according to claim 1, **characterised in that** said transfer means (22) comprise a recharge opening (23) defined on said tubular body (13) and a deflection plate (24) extending between the inner surface of said tubular body (13) and said containment jacket (17), said deflection plate (24) being configured to divert said granular material (M) from said recirculation gap (20) to said recharge opening (23).

4. Machine structure according to one or more of the preceding claims, **characterised in that** said recirculation gap (20), between said outlet mouth (15) and said deflection plate (24), is empty and is available to be crossed by said granular material (M).

5. Machine structure according to claim 3, **characterised in that** said transfer means (22) comprise an oblique collecting wall (25) extending between the inner surface of said tubular body (13) and said containment jacket (17), said oblique collecting wall (25) being configured to divert said granular material (M) towards said deflection plate (24).

6. Machine structure according to one or more of the preceding claims, **characterised in that** said heating means (18) are positioned in such a way that they operate at least below said containment jacket (17) with respect to an arrangement of use of the machine structure (10).

7. Machine structure according to one or more of the preceding claims, **characterised in that** said motor drive means (19) comprise:
- a ring gear (27), coaxial to said main axis (X) and extending on the external surface of said containment jacket (17);
- a motor (28) with a pinion (29);
- a flexible longitudinal element (30) for transmitting the torque from said pinion (29) to said ring gear (27).

8. Machine structure according to one or more of the preceding claims, **characterised in that** said load-bearing frame (11) comprises two rear pillars (11a, 11b) and two front pillars (11c, 11d), the front pillars (11c, 11d) being higher than the two rear pillars (11a, 11b).

9. Machine structure according to the preceding claim, **characterised in that,** on each of said front and rear pillars, a support wheel (35, 36, 37, 38) configured to support and guide the rotation of said containment jacket (17) is present.

## Patentansprüche

1. Struktur einer Maschine (10) zum Zubereiten von Snacks in einem Salzbad, umfassend:
- einen Tragrahmen (11);
- eine Mischtrommel (12), umfassend einen rohrförmigen Körper (13), der sich entlang einer Hauptachse (X) erstreckt, eine Einlassöffnung (14), eine Auslassöffnung (15) und eine Förderschnecke (16) im besagten rohrförmigen Körper (13), die sich zwischen der besagten Einlassöffnung (14) und der besagten Auslassöffnung (15) erstreckt, wobei die besagte Förderschnecke (16) konfiguriert ist, um eine Vielzahl von Elementen (E), die innerhalb des besagten rohrförmigen Körpers (13) angeordnet sind, zu zwingen, sich von der besagten Einlassöffnung (14) in Richtung der besagten Auslassöffnung (15) zu bewegen;
- ein Einschlussgehäuse (17), das konfiguriert ist, um die besagte Mischtrommel (12) zu umschließen und damit einstückig ist;
- einen Rezirkulationsspalt (20), der zwischen der besagten Mischtrommel (12) und dem besagten Einschlussgehäuse (17) definiert ist;
- eine Siebzone (21), die innerhalb des besagten Einschlussgehäuses (17) definiert ist, zum Abscheiden der besagten Elemente (E) innerhalb des besagten rohrförmigen Körpers (13) aus einem Bad aus granulatförmigem Material (M), in das die besagten Elemente (E) eingetaucht sind;
- Heizmittel (18), die konfiguriert sind, um das besagte Bad aus granulatförmigem Material (M) zu erhitzen;
- Motorantriebsmittel (19) zum kontinuierlichen Drehen des besagten Einschlussgehäuses (17) und der besagten Mischtrommel (12), die damit einstückig ist;
- wobei die besagte Mischtrommel (12), das besagte Einschlussgehäuse (17) und der besagte Rezirkulationsspalt (20) koaxial in Bezug auf die besagte Hauptachse (X) sind,
wobei an der besagten Einlassöffnung (14) Transfermittel (22) vorhanden sind, die konfiguriert sind, um das besagte granulatförmige Material (M) vom besagten Rezirkulationsspalt (20) in die besagte Mischtrommel (12) zu bewegen,
**dadurch gekennzeichnet, dass** die besagte Hauptachse (X) in Bezug auf eine horizontale Referenzebene (P) geneigt ist, wobei die besagte Auslassöffnung (15) in einer Höhe über dem Boden (H1) angeordnet ist, die größer ist als eine entsprechende Höhe über dem Boden (H2) der besagten Einlassöffnung (14).

2. Maschinenstruktur nach Patentanspruch 1, **dadurch gekennzeichnet, dass** das besagte Einschlussgehäuse (17) eine drehende Rutsche zum Rückführen des besagten granulatförmigen Materials (M) von der besagten Auslassöffnung (15) in Richtung der besagten Einlassöffnung (14) definiert.

3. Maschinenstruktur nach Patentanspruch 1, **dadurch gekennzeichnet, dass** die besagten Transfermittel (22) Folgendes umfassen: eine Nachfüllöffnung (23), die auf dem besagten rohrförmigen Körper (13) definiert ist, und eine Ablenkplatte (24), die sich zwischen der Innenfläche des besagten rohrförmigen Körpers (13) und dem besagten Einschlussgehäuse (17) erstreckt, wobei die besagte Ablenkplatte (24) konfiguriert ist, um das besagte granulatförmige Material (M) vom besagten Rezirkulationsspalt (20) zur besagten Nachfüllöffnung (23) umzuleiten.

4. Maschinenstruktur nach einem oder mehreren der vorhergehenden Patentansprüche, **dadurch gekennzeichnet, dass** der besagte Rezirkulationsspalt (20) zwischen der besagten Auslassöffnung (15) und der besagten Ablenkplatte (24) leer ist und das besagte granulatförmige Material (M) dadurch passieren kann.

5. Maschinenstruktur nach Patentanspruch 3, **dadurch gekennzeichnet, dass** die besagten Transfermittel (22) eine schräge Sammelwand (25), die sich zwischen der Innenfläche des besagten rohrförmigen Körpers (13) und dem besagten Einschlussgehäuse (17) erstreckt, umfassen, wobei die besagte schräge Sammelwand (25) konfiguriert ist, um das besagte granulatförmige Material (M) in Richtung der besagten Ablenkplatte (24) umzuleiten.

6. Maschinenstruktur nach einem oder mehreren der vorhergehenden Patentansprüche, **dadurch gekennzeichnet, dass** die besagten Heizmittel (18) derart positioniert sind, dass sie zumindest unterhalb des besagten Einschlussgehäuses (17) in Bezug auf eine Verwendungsanordnung der Maschinenstruktur (10) arbeiten.

7. Maschinenstruktur nach einem oder mehreren der vorhergehenden Patentansprüche, **dadurch gekennzeichnet, dass** die besagten Motorantriebsmittel (19) Folgendes umfassen:
- einen Zahnkranz (27), der koaxial zur besagten Hauptachse (X) ist und sich auf der Außenfläche des besagten Einschlussgehäuses (17) erstreckt;
- einen Motor (28) mit einem Ritzel (29);
- ein flexibles Längselement (30) zum Übertragen des Drehmoments vom besagten Ritzel (29) auf den besagten Zahnkranz (27).

8. Maschinenstruktur nach einem oder mehreren der vorhergehenden Patentansprüche, **dadurch gekennzeichnet, dass** der besagte Tragrahmen (11) zwei hintere Säulen (11a, 11b) und zwei vordere Säulen (11c, 11d) umfasst, wobei die vorderen Säulen (11c, 11d) höher als die beiden hinteren Säulen (11a, 11b) sind.

9. Maschinenstruktur nach dem vorhergehenden Patentanspruch, **dadurch gekennzeichnet, dass** an jeder der besagten vorderen und hinteren Säulen ein Stützrad (35, 36, 37, 38) vorhanden ist, das konfiguriert ist, um die Drehung des besagten Einschlussgehäuses (17) zu stützen und zu führen.

## Revendications

1. Structure d'une machine (10) pour la cuisson de snacks dans un bain de sel, comprenant:
- un châssis porteur (11);
- un tambour de mélange (12), comprenant un corps tubulaire (13) s'étendant le long d'un axe principal (X), un orifice d'entrée (14), un orifice de sortie (15) et une vis d'alimentation (16), interne audit corps tubulaire (13) s'étendant entre ledit orifice d'entrée (14) et ledit orifice de sortie (15), ladite vis d'alimentation (16) étant configurée pour imposer à une pluralité d'éléments (E) placés à l'intérieur dudit corps tubulaire (13) l'avancement dudit orifice d'entrée (14) vers ledit orifice de sortie (15);
- une enveloppe de confinement (17) qui est configurée pour entourer ledit tambour de mélange (12) et qui en fait partie intégrante;
- un espace de recirculation (20) défini entre ledit tambour de mélange (12) et ladite enveloppe de confinement (17);
- une zone de tamisage (21) définie à l'intérieur de ladite enveloppe de confinement (17) pour séparer lesdits éléments (E), internes au corps tubulaire (13), d'un bain de matériau granulaire (M) dans lequel lesdits éléments (E) sont immergés;
- des moyens de chauffage (18) configurés pour chauffer ledit bain de matériau granulaire (M);
- des moyens d'entraînement (19) pour la rotation continue de ladite enveloppe de confinement (17) et dudit tambour de mélange (12) qui y est attaché;
- ledit tambour de mélange (12), ladite enveloppe de confinement (17) et ledit espace de recirculation (20) étant coaxiaux par rapport audit axe principal (X),
audit orifice d'entrée (14) se trouvant des moyens de transfert (22) configurés pour déplacer ledit matériau granulaire (M) dudit espace de recirculation (20) vers l'intérieur dudit tambour de mélange (12),
**caractérisée en ce que** ledit axe principal (X) est incliné par rapport à un plan horizontal de référence (P), ledit orifice de sortie (15) étant placée à une hauteur au-dessus du sol (H1), qui est supérieure à une hauteur correspondante au-dessus du sol (H2) dudit orifice d'entrée (14).

2. Structure de machine selon la revendication 1, **caractérisée en ce que** ladite enveloppe de confinement (17) définit une goulotte rotative pour renvoyer ledit matériau granulaire (M) dudit orifice de sortie (15) audit orifice d'entrée (14).

3. Structure de machine selon la revendication 1, **caractérisée en ce que** lesdits moyens de transfert (22) comprennent une ouverture de rechargement (23) définie sur ledit corps tubulaire (13) et une plaque de déflexion (24) s'étendant entre la surface intérieure dudit corps tubulaire (13) et ladite enveloppe de confinement (17), ladite plaque de déflexion (24) étant configurée pour dévier ledit matériau granulaire (M) dudit espace de recirculation (20) vers ladite ouverture de rechargement (23).

4. Structure de machine selon l'une ou plusieurs des revendications précédentes, **caractérisée en ce que** ledit espace de recirculation (20), entre ledit orifice de sortie (15) et ladite plaque de déflexion (24), est vide et peut être traversé par ledit matériau granulaire (M).

5. Structure de machine selon la revendication 3, **caractérisée en ce que** lesdits moyens de transfert (22) comprennent une paroi collectrice oblique (25) s'étendant entre la surface intérieure dudit corps tubulaire (13) et ladite enveloppe de confinement (17), ladite paroi collectrice oblique (25) étant configurée pour dévier ledit matériau granulaire (M) vers ladite plaque de déflexion (24).

6. Structure de machine selon l'une ou plusieurs des revendications précédentes, **caractérisée en ce que** lesdits moyens de chauffage (18) sont positionnés de manière à fonctionner au moins en dessous de ladite enveloppe de confinement (17) par rapport à une disposition d'utilisation de la structure de machine (10).

7. Structure de machine selon l'une ou plusieurs des revendications précédentes, **caractérisée en ce que** lesdits moyens d'entraînement (19) comprennent:
- une couronne (27), coaxiale audit axe principal (X) et s'étendant sur la surface extérieure de ladite enveloppe de confinement (17);
- un moteur (28) avec un pignon (29);
- un élément flexible longitudinal (30) pour transmettre le couple dudit pignon (29) à ladite couronne (27).

8. Structure de machine selon l'une ou plusieurs des revendications précédentes, **caractérisée en ce que** ledit châssis porteur (11) comprend deux montants arrière (11a, 11b) et deux montants avant (11c, 11d), les montants avant (11c, 11d) ayant une hauteur supérieure par rapport aux deux montants arrière (11a, 11b).

9. Structure de machine selon la revendication précédente, **caractérisée en ce que,** sur chacun desdits montants avant et arrière, se trouve une roue de support (35, 36, 37, 38) configurée pour supporter et guider la rotation de ladite enveloppe de confinement (17).
